# EUROPEAN PATENT SPECIFICATION

(11) **EP 0 794 049 B1**
(45) Date of publication and mention of the grant of the patent: **26.06.2002**
(21) Application number: 97200703.3
(22) Date of filing: 10.03.1997
(51) Int. Cl.: B29D 30/44, B29D 30/46

(54) **Winding method and apparatus**
Wickelverfahren und Vorrichtung
Procédé et appareil de bobinage

(30) Priority: 08.03.1996 JP 5150296
(43) Date of publication of application: 10.09.1997
(73) Proprietor: MITSUBISHI JUKOGYO KABUSHIKI KAISHA, Tokyo (JP)
(72) Inventor: Miyamoto, Yoshinori, c/o Nagasaki Shipyard, Nagasaki, Nagasaki-ken (JP); Kimura, Minoru, c/o Nagasaki Shipyard, Nagasaki, Nagasaki-ken (JP); Agawa, Jiro, c/o Nagasaki Shipyard, Nagasaki, Nagasaki-ken (JP)
(74) Representative: Smulders, Theodorus A.H.J., Ir.

(56) References cited:
- EP-A- 0 501 030
- EP-A- 0 649 807
- US-A- 1 923 699
- US-A- 2 902 083
- US-A- 4 629 139

## Description

### BACKGROUND OF THE INVENTION

The present invention relates to a winding method and apparatus. More particularly, the present invention relates to a method and apparatus for winding a plurality of material strips about a takeup member. The material strips may be belted tire components for a tire, which components are wound spirally about the left-hand and right-hand sides of a molding drum.

When winding a belted tire component about a molding drum, it is a conventional practice to cut such tire-component strip into two strips and mount them independently on reels. The separate reels of material are then placed in a material-supplying position, and the tire component from each reel is removed from the supply reel and wound about the respective opposite ends of a molding drum. One such conventional arrangement is shown in Figure 2, which is a plan view of the feeding and winding apparatus of the tire component.

Referring to Figure 2, the belted tire component 6 is shown being wound about a takeup member or molding drum 1. The belted tire components 6, shown in Figure 2, are wound at opposite ends of the drum 1 independently of the central area of the drum.

Each of the strips of the material 6 have been independently split from a single material strip and mounted on the reels 11, which are the supply reels. The reels 11 are shown mounted on the reel-switching means 12. It should be noted that the upper and lower portions of Figure 2 are identical and, accordingly, these elements are identically numbered. In addition, the method and apparatus for winding the material strip 6 will be discussed with only the upper member of Figure 2, but it should be appreciated that the method and apparatus practiced by the other portion of Figure 2 is exactly the same.

The material 6 is taken from the supply reel 11 by a feed roller 15 driven by a driving motor 8 at a desired rate of speed. Connected between the feed roller 15 and the supply reel 11 is a material-connecting means 10 having a purpose which will be subsequently described.

Before being wound about the molding drum or takeup member 1, the material 6 passes through a festooning device 7. The device 7 adjusts the tension of the material 6 appropriately for the takeup member 1. Adjusting the tension will hereafter be called "festooning". Along the path of the material 6 is arranged the attaching means 2 for attaching the material to the takeup member 1. The attaching means is driven by a feed-screw device 5 which rotates to move the member 2 parallel to the axis of the molding drum or takeup member 1.

One end of the feed screw 5 is driven by a timing pulley 3, which also cooperates with a similar pulley 3 attached to the rotatable shaft of a motor 4.

In operation, the conventional apparatus shown in Figure 2 starts with a material strip 6, which has been split into two parts of equal width prior to being placed on the supply reel 11. Thus, the two strips of material 6 are fed to opposite ends of the takeup drum 1 from separate supply reels 11. Each of the material strips 6 are taken from the respective supply reels 11 via the respective attaching means 2 by the feeding devices 15 driven by the respective motors 8. The materials are festooned by the festooning devices 7 and are attached to the respective ends areas of the molding drum 1 via their respective material-connecting means 10 to 2 as the feed screws 5 rotate to move the attaching means 2 and wind the materials 6 spirally about the drum 1.

In the event that one of the supply reels 11 runs out of its respective material strip 6, this is detected by an out-of-material detecting means (not illustrated), and the apparatus is stopped. A new reel 11 with a new material strip 6 is provided via the reel-switching means 12, and the strip 6 on the new reel 11 is attached to the previous strip 6 via the material-connecting means 10.

With the new supply reel in place and the new material strip connected, the apparatus can then go back into operation. It should be evident that when the other reel 11 runs out of material, the out-of-material detecting means notes this and again stops the apparatus. That respective switching means 12 is then utilized to provide a new supply of material strip 6. The new strip is attached to the strip already in the winding apparatus via the connecting means 10 and once again the apparatus restarts.

It should be evident that this constant stopping and starting for each reel is time-consuming and costly. This leads to poor productivity.

A further problem with the conventional apparatus shown in Figure 2 is that it requires two festooning devices 7, two material-feeding devices 8 and 15, and two material-connecting devices 10, as well as two reel-switching means 12. This clearly provides a complicated configuration for the conventional apparatus.

### SUMMARY OF THE INVENTION

It is, therefore, an object of the present invention to overcome the above-noted problems with the conventional method and apparatus for winding the material strips.

It is an object of the present invention to provide a method and apparatus for winding a material strip which will improve the productivity of the apparatus and will simplify the configuration of the winding apparatus.

In accordance with the method practiced by the present invention, a plurality of material strips are wound about a takeup member which has a central area and end areas. The method includes winding a material strip on a supply member. The material strip is drawn away from the supply member at a desired rate. The material strip is then cut into a plurality of strips of a predetermined size by a cutting means. The plurality of strips of material are then fed from the cutting means to the takeup member, and the plurality of strips are wound about the end areas of the takeup member independently of the central area of such takeup member.

In a preferred method practicing the principles of the present invention, the plurality of material strips comprises a first and a second material strip, the takeup member is a molding drum, and the strips are spirally wound about such drum.

In a desired method according to the principles of the present invention, the strips of material are belted tire components and the takeup member is a molding drum.

In a preferred method, the material strips are festooned before they are wound on the takeup member.

The method may also be practiced by simultaneously feeding the plurality of strips from the cutting means to the takeup member and simultaneously winding the strips about the takeup member.

In a preferred embodiment of the apparatus incorporating the principles of the present invention, a means for winding a material strip on a supply member are provided. Means are also provided for drawing the material strip away from the supply member at a desired rate. Cutting means are included for cutting the material strip into a plurality of strips of a predetermined size. Means are also included for feeding the plurality of strips from the cutting means to the takeup member. Finally, means are included for winding the plurality of strips about the end areas of the takeup member independently of the central area of the takeup member.

In a further preferred embodiment of the present invention, material-connecting means for the ship material are arranged between the supply member and the cutting means.

In a further preferred embodiment of the present invention, the plurality of material strips include a first and a second material strip, the takeup member is a drum, and the winding means winds the strips spirally about such drum. In a further preferred embodiment of the present invention, the material strips are belted tire components and the takeup member is a molding drum.

### BRIEF DESCRIPTION OF THE DRAWINGS

The above and other objects, features, and advantages of the present invention will become more apparent from the following detailed description taken with respect to the accompanying drawings, in which:
Figure 1 includes Figure 1(a) which is a plan view of a preferred embodiment of the present invention and Figure 1(b) which is a magnified view of a portion of Figure 1(a); and
Figure 2 is a plan view of a conventional tire-component winding apparatus.

### DESCRIPTION OF THE PREFERRED EMBODIMENTS

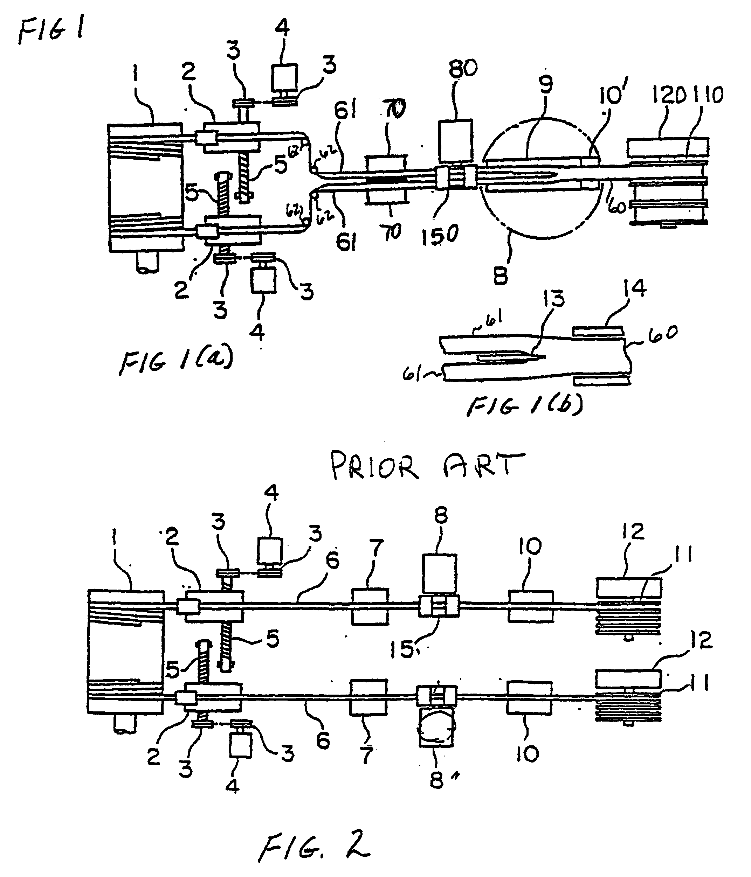

Referring to Figure 1(a), the elements that are numbered with the same elements as that of the prior art (Figure 2) have the same functions and are substantially the same as that shown in Figure 2 and discussed above.

In Figure 1(a), the supply reel 110 is mounted on a reel-switching mechanism 120. A wide tire component 60 is a wound on the reel 110 and taken therefrom via a feeding roller 150 attached to a driving motor 80. The motor 80 and the feeding roller 150 rotate at a predetermined speed so that the material 60 is drawn from the supply reel 110 at a desired rate.

Arranged between the feeding-roller device 80, 150, is a material-connecting means 10' for the material strip 60. Arranged between the material-connecting means 10' and the feeding-roller device 80, 150, is a material-cutting means 9. The cutting means 9 is shown in Figure 1(a) surrounded by a dot-dashed circle B.

A magnified view of the area within the circle B of Figure 1(a) is shown in Figure 1(b). The material 60 is fed into the cutter apparatus 9 via guiding members 14, which substantially contact the edges of the material strip 60. The strip 60 is then moved against the front edge of a cutter blade 13 of the material-cutting means 9 as it pulled from the supply reel 110 by the feed-roller device 80, 150.

The cutter blade 13 cuts the material 60 into two independent strips 61 of a predetermined size. In the embodiment shown in Figure 1(b), the strips 61 are each substantially one-half of the width of the material 60.

The two strips of material 61 are now fed from the feeding-roller member 150 to the festooning device 70, which can festoon each of the strips 61. The two festooned material strips 61 are then fed via guiding rollers 62 to opposite end areas of the molding drum 1 via the respective attaching means 2. As before, the attaching means 2 are driven in a direction which is parallel to the direction of the axis of the drum 1 by means of the feed screws 5, the timing pulleys 3, and the driving motors 4.

The end result is that the strips of the material 61, which may be belted tire components, for example, are spirally wound about the opposite end areas of the molding drum 1 independently of the central area of the drum 1.

The advantages of the arrangement shown in Figure 1(a) are clear. If the supply reel 110 runs out of material 60, this is detected by the out-of-material detector, as before. The winding apparatus is stopped temporarily for switching the used reel 110 to a new reel 110 and for connecting the new belted tire component 60 to the belted tire component 60 in the material-connecting means 10'. The apparatus is then restarted and the material continues to be wound spirally about the end areas of the molding drum 1. It is, thus, clear that the amount of time that the apparatus has to be stopped is cut substantially in one-half. That is, since there is only a single supply reel, when this is out of material, the reel is changed. There is no necessity for waiting until the "other half" of the belted tire component runs out on its respective supply reel.

It is also clear that the configuration of the apparatus of Figure 1(a) is substantially simpler, having less components than the conventional apparatus shown in Figure 2. As mentioned earlier, only one material-connecting means is required, only one feed-roller device is required, and substantially only one festooning device is required. The additional equipment that is required in the illustrated embodiment of Figure 1(a) is the material-cutting means 9, having the cutter 13. It is clear, however, that this is a relatively inexpensive portion of the apparatus and that the overall cost of the apparatus incorporating the principles of the present invention is less than the cost of the conventional system. Also, with the illustrated embodiment, it is only necessary to stop one feeding system before supplying another supply reel with new material. With the conventional system, the two separate feeding systems had to be stopped at different times, and separate connecting means had to be used each time, so that it is clear that substantially more time is taken up by the conventional system.

Furthermore, since only a single strip of the material is used on a supply reel, the use of the apparatus incorporating the principles of the present invention reduces the number of reels required compared to conventional apparatus wherein the material is split into two strips of equal width and respectively wound about separate reels and prepared in plurality. As noted above, the illustrated embodiment of the present invention has only one set of components in a substantial portion of the apparatus compared to duplicates in the conventional apparatus. It is, therefore, clear that the method and apparatus incorporating the principles of the present invention simplify the configuration of the winding method and apparatus and improves productivity.

While the present invention has been described with respect to an illustrated embodiment and preferred method, it is clear that various modifications will become possible for those skilled in the art after receiving the teachings of the present disclosure without departing from the scope of the present invention.

## Claims

1. A method for winding a plurality of material strips (61) about a takeup member (1) having a central area and end areas, said method comprising the steps of:
winding a material strip on a supply member (110);
drawing said material strip away from said supply member at a desired rate;
cutting said material strip into a plurality of strips of a predetermined size by a cutting means (9);
feeding said plurality of strips from said cutting means to said takeup member; and
winding said plurality of strips about said end areas of said takeup member independently of said central area.

2. A method, as claimed in claim 1, wherein said plurality of material strips comprises a first and a second material strip, said takeup member is a drum, and said strips are spirally wound about said drum.

3. A method, as claimed in claim 1 or claim 2, wherein said material strips are belted tire components and said takeup member is a molding drum.

4. A method, as claimed in claim 1, 2, or 3, wherein the tension of said material strips is suitably adjusted before they are wound on said takeup member.

5. A method, as claimed in any one of the preceding claims, wherein said material strips are simultaneously fed from said cutting means to said takeup member and are simultaneously wound thereabout.

6. A method, as claimed in any one of the preceding claims, wherein said plurality of material strips are spirally wound about said takeup member.

7. Apparatus for winding a plurality of material strips (61) about a takeup member (1) having a central area and end areas, said apparatus comprising:
means for winding a material strip on a supply member (110);
means for drawing said material strip away from said supply member at a desired rate;
cutting means (9) for cutting said material strip into a plurality of strips of a predetermined size;
means for feeding (80, 150) said plurality of strips from said cutting means to said takeup member; and
means (2) for winding said plurality of strips about said end areas of said takeup member independently of said central area.

8. Apparatus, as claimed in claim 7, wherein material-connecting means (10') are arranged between said supply member and said cutting means.

9. Apparatus, as claimed in claim 7 or claim 8, wherein said plurality of material strips comprises a first and a second material strip, said takeup member (1) is a drum, and said winding means (2) winds said strips spirally about said drum.

10. Apparatus, as claimed in claim 7, 8, or 9, wherein said material strips are belted tire components and said takeup member is a molding drum.

11. Apparatus, as claimed in any one of claims 7 to 10, having tension adjusting means (70) arranged between said cutting means (9) and said takeup member (1).

12. Apparatus, as claimed in any one of claims 7 to 11, wherein said feeding means simultaneously feeds said strips from said cutting means to said takeup member and said winding means simultaneously winds said plurality of strips about said takeup member.

13. Apparatus, as claimed in any one of claims 7 to 12, wherein said winding means spirally winds said material strips about said takeup member.

## Patentansprüche

1. Verfahren zum Wickeln mehrerer Materialstreifen (61) um ein Aufnahmeteil (1), das einen zentralen Bereich und Endbereiche aufweist, mit den folgenden Schritten:
Wickeln eines Materialstreifens auf ein Zuführteil (110);
Abziehen des Materialstreifens von dem Zuführteil mit einer gewünschten Rate;
Schneiden des Materialstreifens in mehrere Streifen vorbestimmter Größe mittels einer Schneidvorrichtung (9);
Zuführen der mehreren Streifen von der Schneidvorrichtung zu dem Aufnahmeteil; und
Wickeln der mehreren Streifen um die Endbereiche des Aufnahmeteils unabhängig von dem zentralen Bereich.

2. Verfahren nach Anspruch 1, bei dem die mehreren Materialstreifen einen ersten und einen zweiten Materialstreifen aufweisen, das Aufnahmeteil eine Trommel ist und die Streifen spiralig um die Trommel gewickelt werden.

3. Verfahren nach Anspruch 1 oder Anspruch 2, bei dem die Materialstreifen Gürtelreifen-Komponenten sind und das Aufnahmeteil eine Formtrommel ist.

4. Verfahren nach Anspruch 1, 2 oder 3, bei dem die Spannung der Materialstreifen passend eingestellt wird, bevor sie auf das Aufnahmeteil gewickelt werden.

5. Verfahren nach einem der vorhergehenden Ansprüche, bei dem die Materialstreifen gleichzeitig von der Schneidvorrichtung her dem Aufnahmeteil zugeführt werden und gleichzeitig um dieses gewickelt werden.

6. Verfahren nach einem der vorhergehenden Ansprüche, bei dem die mehreren Materialstreifen spiralig auf das Aufnahmeteil gewickelt werden,

7. Vorrichtung zum Wickeln mehrerer Materialstreifen (61) um ein Aufnahmeteil (1), das einen zentralen Bereich und Endbereiche aufweist, mit:
einer Vorrichtung zum Wickeln eines Materialstreifens auf ein Zuführteil (110);
einer Vorrichtung zum Abziehen des Materialstreifens von dem Zuführteil mit einer gewünschten Rate;
einer Schneidvorrichtung (9) zum Schneiden des Materialstreifens in mehrere Streifen vorbestimmter Größe;
einer Zuführvorrichtung (80,150) zum Zuführen der mehreren Streifen von der Schneidvorrichtung zu dem Aufnahmeteil; und
einer Vorrichtung (2) zum Wickeln der mehreren Streifen um die Endbereiche des Aufnahmeteils unabhängig von dem zentralen Bereich.

8. Vorrichtung nach Anspruch 7, bei der Materialverbindungsvorrichtungen (10) zwischen dem Zuführteil und der Schneidvorrichtung angeordnet sind.

9. Vorrichtung nach Anspruch 7 oder Anspruch 8, bei der die mehreren Materialstreifen einen ersten und einen zweiten Materialstreifen aufweisen, das Aufnahmeteil (1) eine Trommel ist und die Wickelvorrichtung (2) die Streifen spiralig um die Trommel wickelt.

10. Vorrichtung nach Anspruch 7, 8 oder 9, bei dem die Materialstreifen Gürtelreifen-Komponenten sind und das Aufnahmeteil eine Formtrommel ist.

11. Vorrichtung nach einem der Ansprüche 7 bis 10, mit einer Spannungseinstellvorrichtung (70), die zwischen der Schneidvorrichtung (9) und dem Aufnahmeteil (1) angeordnet ist.

12. Vorrichtung nach einem der Ansprüche 7 bis 11, bei dem die Zuführvorrichtung die Streifen gleichzeitig von der Schneidvorrichtung her dem Aufnahmeteil zuführt und die Wickelvorrichtung die mehreren Streifen gleichzeitig um das Aufnahmeteil wickelt.

13. Vorrichtung nach einem der Ansprüche 7 bis 12, bei dem die Wickelvorrichtung die Materialstreifen spiralig auf das Aufnahmeteil wickelt.

## Revendications

1. Procédé de bobinage d'une pluralité de bandes de matériau (61) autour d'un élément récepteur (1) qui comporte une zone centrale et des zones d'extrémité, ledit procédé comprenant les étapes consistant à :
enrouler une bande de matériau sur un élément d'alimentation (110);
tirer ladite bande de matériau dudit élément d'alimentation à une vitesse souhaitée;
couper ladite bande de matériau en une pluralité de bandes de taille déterminée au préalable au moyen d'un moyen de coupe (9);
faire passer ladite pluralité de bandes dudit moyen de coupe audit élément récepteur; et
enrouler ladite pluralité de bandes autour desdites zones d'extrémité dudit élément récepteur indépendamment de ladite zone centrale.

2. Procédé selon la revendication 1, dans lequel ladite pluralité de bandes de matériau comprend une première et une deuxième bande de matériau, ledit élément récepteur est un tambour, et lesdites bandes sont enroulées en spirale sur ledit tambour.

3. Procédé selon la revendication 1 ou 2, dans lequel lesdites bandes de matériau sont des composants de pneu à ceinture et ledit élément récepteur est un tambour de moulage.

4. Procédé selon la revendication 1, 2 ou 3, dans lequel la tension desdites bandes de matériau est réglée de manière appropriée avant leur enroulement sur ledit élément récepteur.

5. Procédé selon l'une quelconque des revendications précédentes, dans lequel on fait passer simultanément lesdites bandes de matériau dudit moyen de coupe audit élément récepteur et on les enroule simultanément sur ce dernier.

6. Procédé selon l'une quelconque des revendications précédentes, dans lequel ladite pluralité de bandes de matériau est enroulée en spirale sur ledit élément récepteur.

7. Appareil de bobinage d'une pluralité de bandes de matériau (61) autour d'un élément récepteur (1) qui comporte une zone centrale et des zones d'extrémité, ledit procédé comprenant :
un moyen pour enrouler une bande de matériau sur un élément d'alimentation (110);
un moyen pour tirer ladite bande de matériau dudit élément d'alimentation à une vitesse souhaitée;
un moyen de coupe (9) pour couper ladite bande de matériau en une pluralité de bandes de taille déterminée au préalable;
un moyen pour faire passer (80 ,150) ladite pluralité de bandes dudit moyen de coupe audit élément récepteur; et
un moyen (2) pour enrouler ladite pluralité de bandes autour desdites zones d'extrémité dudit élément récepteur indépendamment de ladite zone centrale.

8. Appareil selon la revendication 7, dans lequel des moyens (10') de connexion de matériau sont agencés entre ledit élément d'alimentation et ledit moyen de coupe.

9. Appareil selon la revendication 7 ou 8, dans lequel ladite pluralité de bandes de matériau comprend une première et une deuxième bande de matériau, ledit élément récepteur (1) est un tambour, et ledit moyen d'enroulement (2) enroule lesdites bandes en spirale sur le tambour.

10. Appareil selon la revendication 7, 8 ou 9, dans lequel lesdites bandes de matériau sont des composants de pneu à ceinture et ledit élément récepteur est un tambour de moulage.

11. Appareil selon l'une quelconque des revendications 7 à 10, comportant un moyen de réglagc de tension (70) agencé entre ledit moyen de coupe (9) et ledit élément récepteur (1).

12. Appareil selon l'une quelconque des revendications 7 à 11, dans lequel ledit moyen d'avance fait passer simultanément lesdites bandes dudit moyen de coupe audit élément récepteur et ledit moyen d'enroulement enroule simultanément ladite pluralité de bandes sur ledit élément récepteur.

13. Appareil selon l'une quelconque des revendications 7 à 12, dans lequel ledit moyen d'enroulement enroule lesdites bandes de matériau en spirale sur ledit élément récepteur.
